# EUROPEAN PATENT APPLICATION

(11) **EP 2 433 872 A1**
(43) Date of publication of application: **28.03.2012**
(21) Application number: 10766680.2
(22) Date of filing: 19.04.2010
(51) Int. Cl.: B65B 25/14, B65G 57/06, B65H 29/36

(54) **BAG DISPENSING DEVICE, BAG DISPENSING MACHINE COMPRISING SAID DEVICE, AND AUTOMATED METHOD FOR PACKING BAGS**

(30) Priority: 22.04.2009 ES 200901048
(71) Applicant: Macfer Engineering, S.L, 08205 Barcelona (ES)
(72) Inventor: RODRIGUEZ CUESTA, Alejandro, E-08205 Barcelona (ES)
(74) Representative: Isern-Jara, Nuria
(86) International application number: PCT/ES2010/070239
(87) International publication number: WO 2010/122197

(57) **Abstract**

The invention relates to a bag dispensing device, especially for bags that have a previously lined part that is superimposed in a lateral wall of the bag, enabling the bag supply and control process to be automated by means of the arrangement of a sorting element provided with a pair of rotating elements such that it selects, using control means, with artificial vision, the dimensionally correct bags from the bags that have some type of shape defect. The invention also relates to a bag dispensing machine provided with a dispensing device of the above-mentioned type.

## Description

### OBJECT OF THE INVENTION

The object of the Invention Patent herein is to register a bag dispensing device, a machine comprising said device that incorporates significant innovations and advantages and an automated method for packing bags.

More specifically, the invention relates to a bag dispensing device and a machine that incorporates the aforementioned device, especially for bags of the type that have a previously lined base part that is superimposed in a lateral wall of the bag, enabling the supply of bags in a fast and automated manner.

### BACKGROUND OF THE INVENTION

Nowadays, the use of bags provided by retailers to their customers to carry products purchased is widespread. Among the wide variety of bags known, we must mention those that have a fold near the base such that when the bag is stored it occupies a smaller space as the base part of the bag becomes superimposed in one of the lateral walls, while in a condition of use of the bag, the fold can increase the surface of the base of the bag thereby adapting a substantially rectangular prism shaped interior volume.

With respect to the bag packing method described above and prior supply to the point of sale, such bags are manually placed in boxes in a preset number by operators who must conduct a manual count as a bag is taken and placed in the appropriate box.

Nonetheless, this process that is carried out manually given the presence of the fold in the bag requires a number of staff thus involving a higher production cost. Another drawback is the fact that the operator may make a mistake at any time during the counting of bags which can cause rejection of the supply of boxes with the bags packed.

Another operation that the operator must do before placing the bag in the appropriate box is to check that the lined part of the bag, which has been joined in a previous stage, has been carried out correctly.

In view of all the foregoing there is a need for a machine or device free from the drawbacks described above.

### DESCRIPTION OF THE INVENTION

The invention herein has been developed to provide a bag dispensing device that resolves the aforementioned drawbacks, further providing other additional advantages that will be apparent from the description detailed hereinafter.

It is therefore a first object of the invention to provide a bag dispensing device in which the bag is of the type that has a previously lined base that is superimposed in a lateral wall of the bag, **characterized in that** it comprises: a bag supply conveyor belt provided with control means using artificial vision that capture the geometric shapes of the lined base part of the bag and compare them with predefined measurements; counting means connected to the control means such that each bag that passes through the belt is counted and a sorting element linked to the control means using artificial vision and to the counting means, such that the dimensionally correct bags are piled vertically one on top of the other in a pile with a preset number of bags, while in the event that the bag may be dimensionally incorrect, it is sent to a second location.

In this descriptive memory the term "dimensional" shall be understood as geometric shapes and not necessarily dimensions per se. Preferably, the sorting element comprises two rotating elements parallel and separated from each other that define a horizontal support surface, an ejection channel. Each rotating element is actuated by an electric actuator coupled to a actuation shaft, such that it transmits the rotary movement from the actuator shaft to the rotating element. These two rotating elements spin simultaneously in operating conditions. In one embodiment of the invention, the control means using artificial vision comprise image capture cameras connected to a server provided with arbitrary means that ensure quality control and inspection and high reliability. Such means work by taking pictures of the bags.

Advantageously, the device of the invention further comprises means for moving the pile of bags from the piling station synchronized with the counting means, such that when the pile has the preset number of bags, such movement means move the pile situated near the sorting element.

Thanks to these characteristics, a work process can be automated, which until now has been manual, and which ensures a predefined number of bags to be supplied in work cycles without manual counting and as a result ruling out an error in the manual counting of bags and ensuring visual inspection of 100% of the bags. In addition, production costs can be reduced as the number of operators required thus far is reduced and, in turn, the level of productivity is increased.

It is another object of the invention herein to provide a new bag dispensing machine in which the bag supplied has a previously lined base part that is superimposed in a lateral wall of the bag, which comprises at least one bag dispensing device of the type described hereinabove. According to another aspect of the machine of the invention it comprises a conveyor belt in which pressing means for boxes are arranged, installed on the previously mentioned robot arm. Such pressing means may comprise a cylinder-piston system, whose piston is vertically movable by actuation means, said piston being provided at its free end with at least one plate that comes into contact with the upper part of the boxes.

Thus, by using a relatively simple construction system the air that could be inside each one of the bags is eliminated, allowing more storage inside each box since the height of the boxes could be reduced by 20% and thus represents a considerable saving in the material the boxes are made from, as well as savings in transportation costs. The presence of air was due to the operator concerned limiting the pressing force on the bags.

Additionally, the machine is provided with guiding means for linear positioning of the boxes in respect of the pressing means that ensure the proper functioning of the bag packing operation.

Lastly, it is also an object of the invention herein to provide an automated method for packing bags, in which the bag is of the type that has a previously lined base part that is superimposed in a lateral wall of the bag, **characterized in that** it comprises the following stages:
- capturing the geometric shapes and presence of the lined base part of a bag arranged on a horizontal plane; and
- comparing the geometric shapes of said bag with preset geometric shapes on a central server;
such that in the case of the compared geometric shapes being acceptable, the bag is piled in a vertical pile for subsequent packing operations while if the bag is not accepted, it is sent to a second rejection location. Other characteristics and advantages of the device object of the invention herein will become apparent from the description of a preferred, although not exclusive embodiment, which is illustrated by way of non-limiting example in the drawings appended, in which:

### BRIEF DESCRIPTION OF THE DRAWINGS

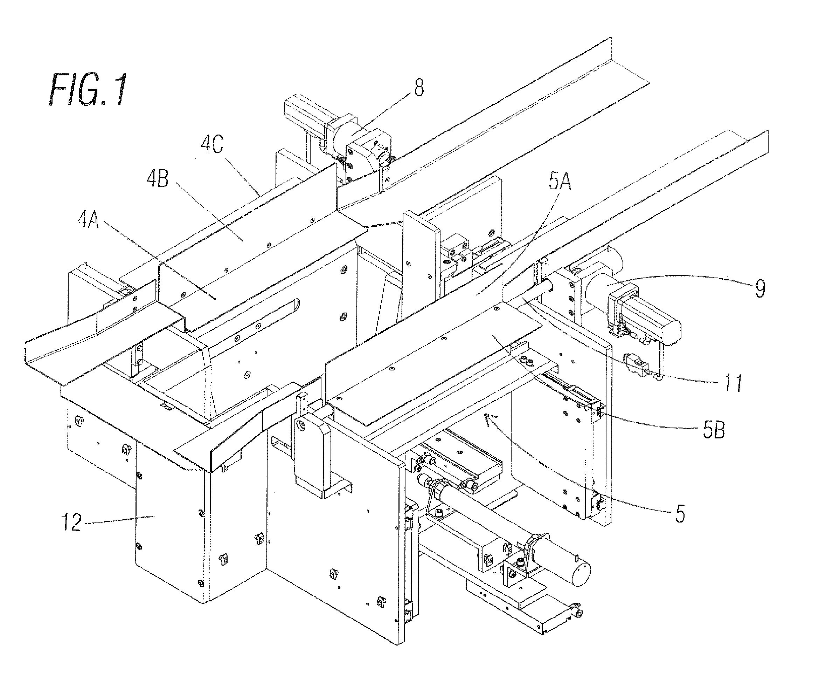

Figure 1.- Perspective view of a bag dispensing device according to the invention herein in which various components have been omitted for the purposes of clarity;

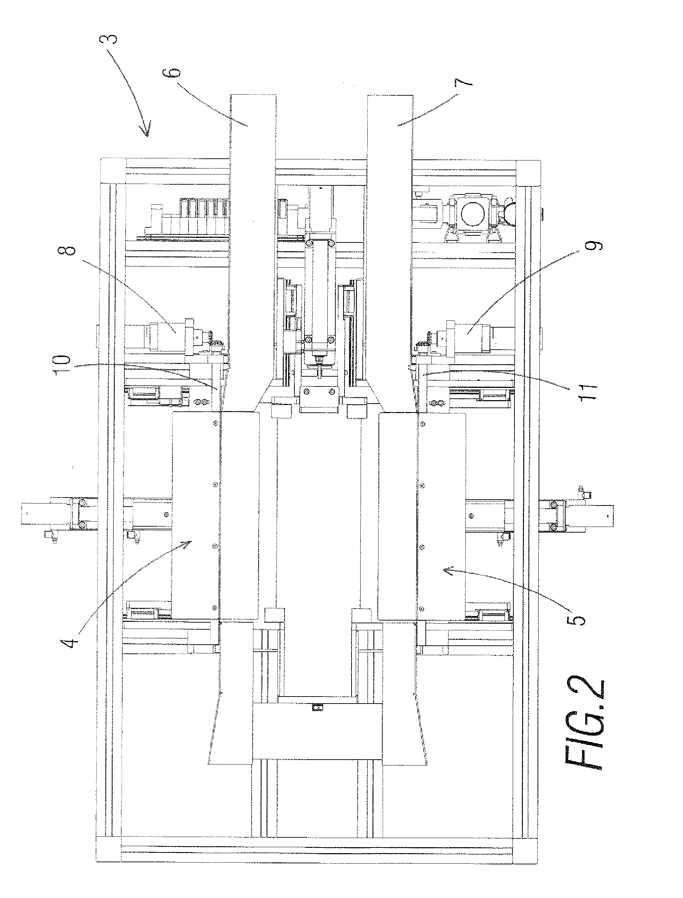

Figure 2.- Top plan view of the sorting element that is part of the mechanism shown in the figure above;

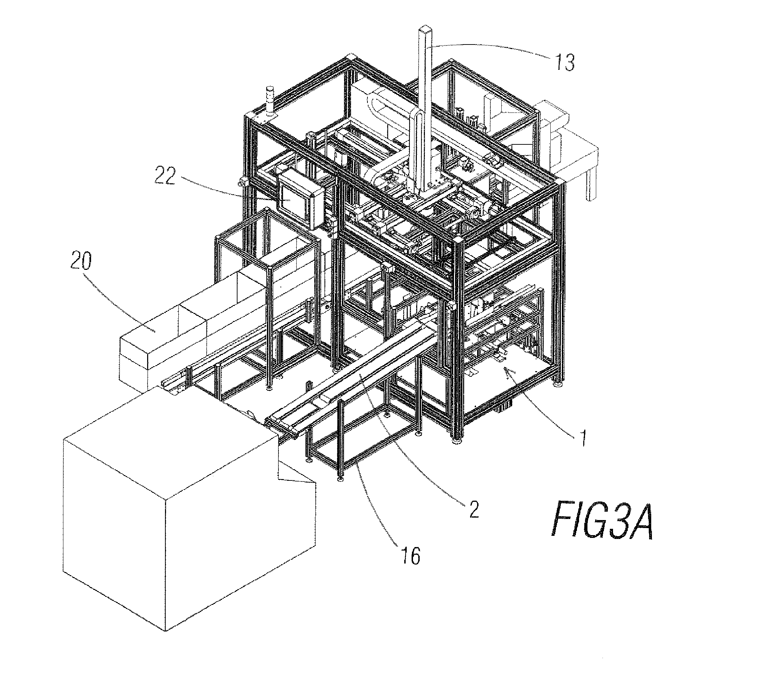

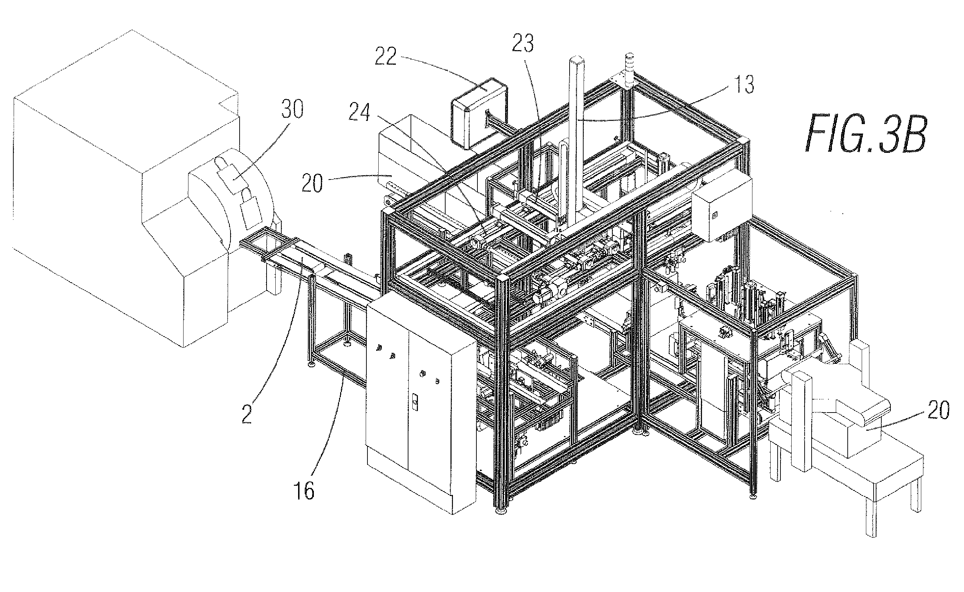

Figures 3A and 3B.- Two perspective views of a bag dispensing machine according to the invention herein;
Figure 4.- Detailed front elevation view of the additional means for pressing and closing boxes supplied in the dispensing machine;

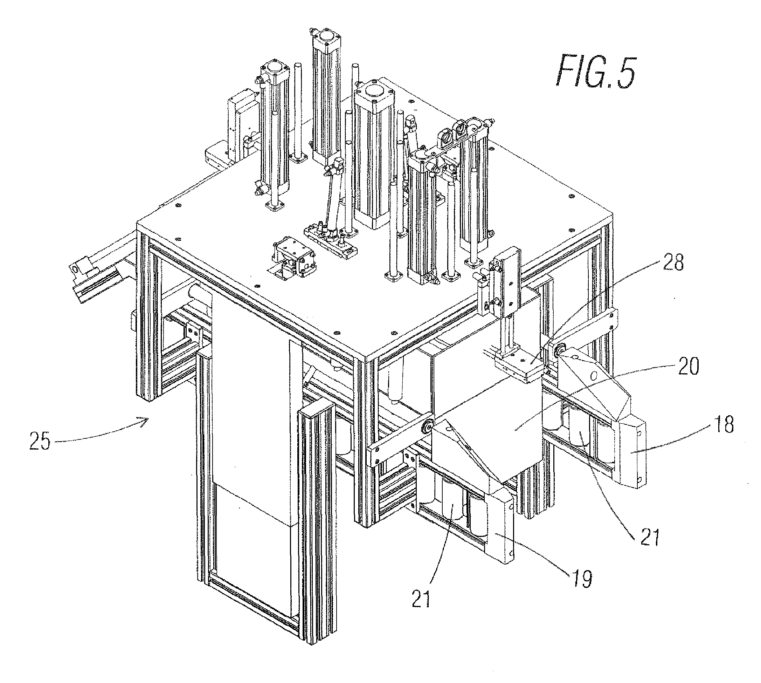

Figure 5.- Detailed front elevation view of the closing station;
Figure 6.- Side elevation view of the machine according to the invention in which some parts have been omitted to facilitate comprehension;
Figure 7A. - Perspective view of one embodiment of the type of bag handled by the device and machine of the invention herein; and Figure 7B. - Plan view of the bag above in a closed condition.

### DESCRIPTION OF A PREFERRED EMBODIMENT

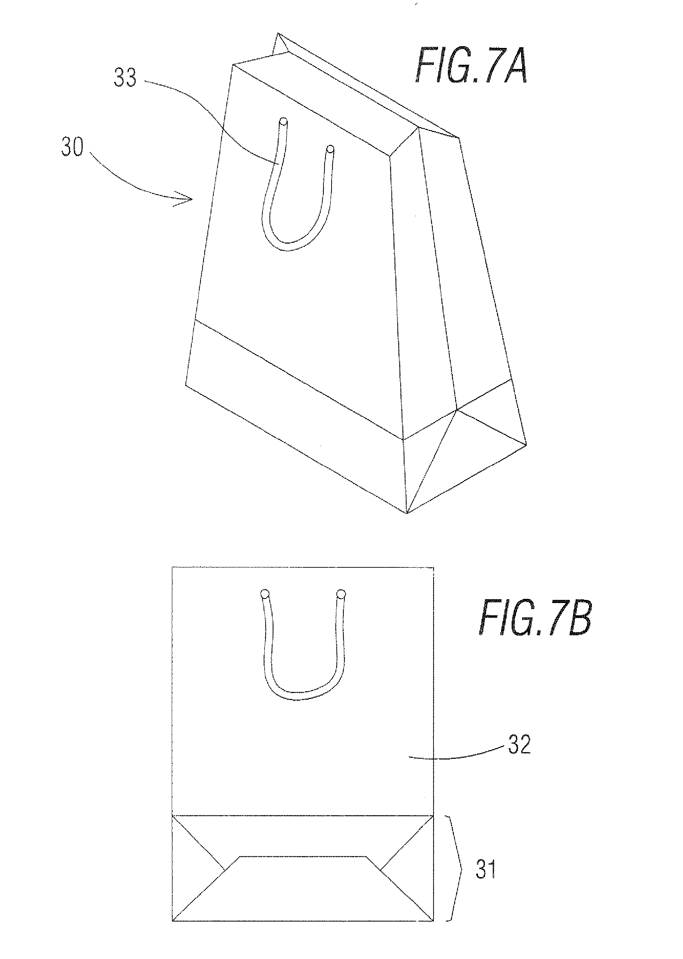

In view of the attached figures, an embodiment of a bag dispensing machine of a certain type comprising a bag dispenser device indicated generally by reference 1 and detailed below is shown. In particular, the bags 30 supplied are those with a previously lined base part 31 that is superimposed in a lateral wall 32 of the bag 30 and a pair of grip handles 33 (see Figures 7A and 7B). This type of bag 30 is widely used by businesses, especially those dedicated to retail sale in the textile industry, etc.

With particular reference to the dispensing device 1, this essentially comprises a conveyor belt 2 for the supply of bags supported by a structure 16 that includes control means by using artificial vision, such as three high-resolution cameras (not shown) that capture the geometric shapes of the lined base part of the bag and compare them with predefined measurements. Simultaneously, the presence or absence of the grip handle provided in the bag with said control means is also checked. The cameras are not explained in greater detail herein since the elements are commercially available. Means (not shown) are also provided in the area of the conveyor belt 2 that verify the presence of the bag handles 30, which are connected to the control means of the dispensing device 1. Although it is not shown in this embodiment, the conveyor belt 2 can have an additional belt located superiorly that acts as a guiding element for the bags that are fed, such that the bags do not move in the wrong direction prior to verification.

Additionally, there are also counting means connected to the control means such that each bag 30 which passes through the belt is counted and a sorting element, referenced generally by 3, linked to the control means by artificial vision and the counting means, such that the dimensionally correct bags are piled 30 vertically one above the other in a pile with a preset number of bags arranged in a bucket 26 or any other element that is suitable to receive the bags, while in the event that the bag 30 may be dimensionally incorrect, it is sent to a second location that corresponds to a container for defective parts.

With reference to the sorting element 3 it comprises two rotating elements 4, 5 arranged in parallel which have a horizontal support surface and an ejection channel through which the rejected the bag is sent, said channel being defined by two beams 6 and 7. Both rotating elements 4 and 5 are each formed by four arms 4A, 4B, 4C, 4D, and 5A, 5B, 5C and 5D, respectively, in a cross-shaped arrangement that can be adjusted electrically in position to adapt to the width of the bag to be handled. These rotating elements 4 and 5 are independently controlled by two electric actuators 8, 9 that act on two separate actuation shafts 10, 11 connected to each of the rotating elements 4, 5.

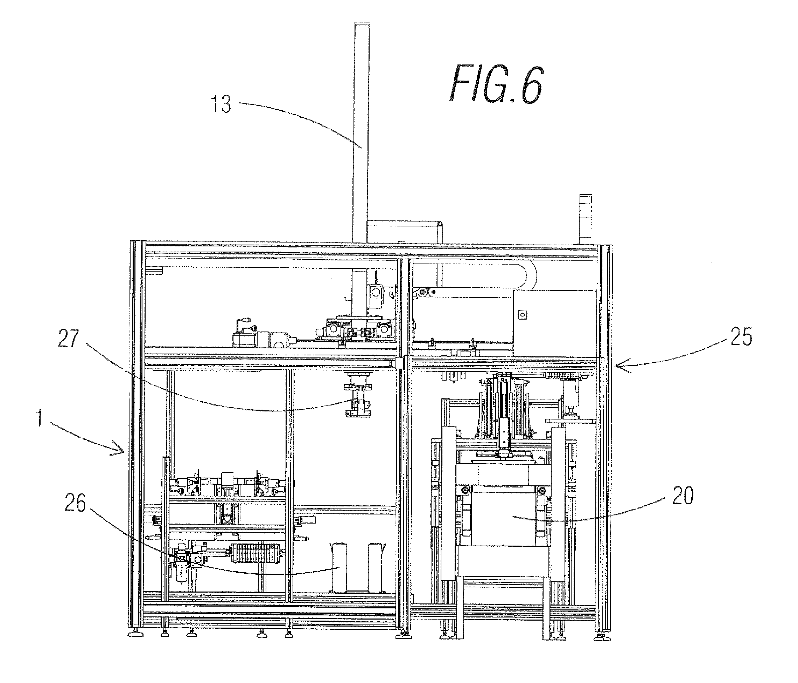

As can be seen, the various components that comprise the sorting element 3 are supported on a metal frame comprising a plurality of plate-shaped metal profiles joined together. Also, the device comprises means for moving the pile of bags from the piling station synchronized with the counting means, such that when the pile has the preset number of bags, said movement means move the pile situated near the sorting element 3. These movement means consist of a robot arm 13 axially movable on three linear coordinate axes 5 (X, Y, Z) and an axis of rotation (that rotates on its vertical axis) that includes a grip or clamping element of the pneumatic type, 27 (see Figure 6) on its end, carrying out the movement of said robot arm 13 by means of actuators. The robot arm moves on the X and Y axis by means of two conventional pads 23 and 24 arranged transversely to each other.

Additionally, the dispensing machine comprises a conveyor belt 14 which is located parallel to the abovementioned dispensing device 1, provided with additional pressing means for boxes 20. In the event the conveyor belt 14 runs out of boxes 20 a light and sound signal indicates the lack thereof, and a minimum of three minutes is given from the time the signal is emitted for the boxes 20 to be replenished on said conveyor belt 14.

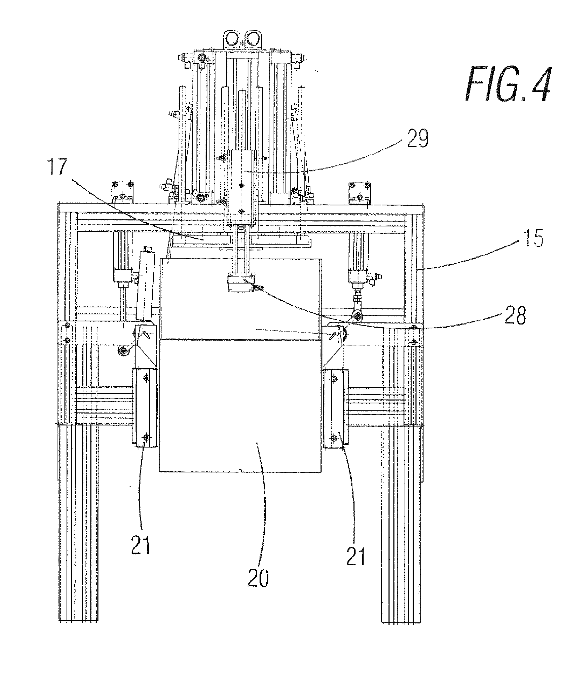

As can be seen more clearly in Figure 4, these additional pressing means are composed of a cylinder-piston system secured to a support structure 15, whose piston 16 is moved vertically, with said piston 16 provided at its lower free end with a plate 17 that comes into contact with the upper part of the boxes and, more specifically, with the pile of bags 30 housed inside the box 20 such that they can be compacted.

There is a closing station, indicated generally by reference 25, which enables the upper flaps 5 of the handled box 20 to be closed, leaving it ready for shipment. The support structure 15 has two lateral guides 18, 19 facing each other which enable the correct positioning of the box to ensure the pressing and closing operations of said box 20. Each of the guides 18, 19 is defined by a plurality of juxtaposed linearly movable rollers 21. The closing of the boxes 20 is performed by means of a series of plates arranged on both sides of the box, pneumatically actuated and on the upper part of the station structure. Figure 4 shows a clear reference to the plate 28 located superiorly with its respective pneumatic cylinder 29.

The machine is controlled by an industrial PC housed in a housing 22 where the operating parameters of the various component parts that make up the machine can be viewed and modified according to job requirements or type of bag to be handled and the number of bags to be placed in each box for supply can also be programmed, for example.

The details, shapes, dimensions and other accessory elements as well as the materials used in the manufacture of the machine and devices of the invention may be conveniently replaced by others that are technically equivalent and do not depart from the essential nature of the invention or from the scope defined by the claims included hereinafter.

## Claims

1. Bag dispensing device (1) in which the bag (30) is of the type that has a previously lined base part (31) that is superimposed in a lateral wall (32) of the bag (30), **characterized in that** it comprises:
a bag supply conveyor belt (2), provided with control means using artificial vision that capture the geometric shapes of the lined base part of the bag (30) and are compared with measurements of a preset lined base part;
counting means connected to the control means such that each bag (30) that passes through the conveyor belt (2) is counted, and
a sorting element (3) linked to the control means using artificial vision and the counting means, such that the dimensionally correct bags are piled vertically one on top of the other in a pile with a preset number of bags (30), while in the case the bag is dimensionally incorrect, it is sent to a second 20 location.

2. Bag dispensing device (1) according to claim 1, **characterized in that** the sorting element comprises two rotating elements (4, 5) separated and arranged in parallel having a horizontal support surface for supporting a bag, and an ejection channel, in which said two rotating elements (4, 5) rotate simultaneously in an operating condition.

3. Bag dispensing device (1) according to claim 1, **characterized in that** the control means using artificial vision comprise image capture cameras connected to a server provided with arbitrary means.

4. Bag dispensing device (1) according to claim 1, **characterized in that** it comprises movement means for the pile of bags from the piling station synchronized with the counting means, such that when the pile has the preset number of bags such movement means move the pile situated near the sorting element.

5. Bag dispensing device (1) according to claim 1, **characterized in that** the movement means consist of a robot arm (13) axially movable on at least two coordinate axes provided with a gripping element at the end of the arm (27).

6. Bag dispensing device (1) according to claim 1, **characterized in that** it comprises at least one bucket to deposit defectively shaped bags (30).

7. Bag dispensing device (1) according to claim 2, **characterized in that** the separation distance between the two rotating elements (4.5) is adjustable.

8. Bag dispensing device (1) according to claim 2, **characterized in that** each rotating element (4, 5) is actuated by an electric actuator (8, 9) coupled to an actuation shaft (10, 11), such that it transmits the rotary motion from the actuation shaft to the rotating element (4, 5).

9. Bag dispensing device (1) according to claims 2 and 8, **characterized in that** the rotating element (4, 5) consists of four arms (4A-4D, 5A-5D) arranged in a cross, which are integrally joined to the actuation shaft.

10. Bag dispensing device (1) according to claim 1, **characterized in that** it comprises presence detector means of at least one handle of the bag.

11. Bag dispensing device (1) according to claim 1, **characterized in that** the conveyor belt is of the detachable type.

12. Bag dispensing machine, in which the supplied bag has a previously lined base part that is superimposed in a lateral wall of the bag (30), **characterized in that** it comprises at least one bag dispensing device (1) according to any of the preceding claims.

13. Bag dispensing machine according to claim 12 **characterized in that** it comprises a conveyor belt (14) in which pressing means for boxes are arranged (20).

14. Bag dispensing machine according to claim 12, **characterized in that** the pressing means are housed in the robot arm (13), said pressing means comprising a cylinder-piston system, whose piston is vertically movable by means of actuation means, said piston being provided, at its free end, with at least one plate (17) that comes into contact with the upper part of the boxes.

15. Bag dispensing machine according to claims 12 and 13, **characterized in that** it comprises guiding means for linear positioning of the boxes (20) in respect of the pressing means.

16. Bag dispensing machine according to claim 15, **characterized in that** the guiding means consist of two guides (18, 19) facing each other and separated by a distance sufficient for the box to pass in between them, whereby the guides (18, 19) are provided with a plurality of juxtaposed rollers(21).

17. Bag dispensing machine according to claim 12, **characterized in that** it comprises a closing station to close the box being handled.

18. Bag dispensing device (1) in which the bag (30) is of the type that has a previously lined base part (31) that is superimposed in a lateral wall (32) of the bag (30), **characterized in that** it comprises: - capturing the geometric shapes and presence of the lined base part of a bag arranged on a horizontal plane; and
- comparing the geometric shapes of said bag with preset geometric shapes on a central server;
such that in the case of the compared geometric shapes being acceptable, the bag is piled in a vertical pile for subsequent packing operations, while if the bag is not accepted, it is sent to a second rejection location.

19. Bag packaging method according to claim 18, **characterized in that** a stage is included where the accepted bags are subsequently introduced into a packing box arranged in at least one pile, and in a subsequent stage at least one pile is pressed from above.
